# EUROPEAN PATENT SPECIFICATION

(11) **EP 2 663 492 B1**
(45) Date of publication and mention of the grant of the patent: **11.03.2015**
(21) Application number: 13721065.4
(22) Date of filing: 13.03.2013
(51) Int. Cl.: B64D 11/06

(54) **VEHICLE SEAT POWERED BY FUEL CELL**
DURCH EINE BRENNSTOFFZELLE ANGETRIEBENER FAHRZEUGSITZ
SIÈGE POUR VÉHICULE ALIMENTÉ PAR PILE À COMBUSTIBLE

(30) Priority: 19.03.2012 US 201261612489 P
(43) Date of publication of application: 20.11.2013
(73) Proprietor: Zodiac Seats France, 36100 Issoudun (FR)
(72) Inventor: OBADIA, Jean-Marc, 38080 Maubec (FR); VELICKOVIC, Predrag, 93110 Rosny sous Bois (FR)
(74) Representative: Marconnet, Sébastien
(86) International application number: PCT/IB2013/051979
(87) International publication number: WO 2013/128430

(56) References cited:
- WO-A1-2009/090026
- DE-A1-102006 020 146
- US-A1- 2008 038 597

## Description

### FIELD OF THE INVENTION

Embodiments of the present invention relate generally to seats, and particularly to seats positioned on-board passenger transport vehicles, that have various features and capabilities powered by a fuel cell system. Embodiments are particularly useful in relation to aircraft seats, and particularly business and first class aircraft seats, which may be provided with one or more of the following features: powered movement/actuation; heating/cooling system; lighting system; in-flight entertainment (IFE) system; power supply for laptop, phone charging, and other personal powered systems; massage option; water mist option; IFE screen cleaning; or any combination thereof, and the power for these features may be provided by power generated by a fuel cell and/or by the by-products created by the fuel cell.

### BACKGROUND

A number of components on-board an aircraft require electrical power for their activation. Many of these components are separate from the electrical components that are actually required to run the aircraft (i.e., the navigation system, fuel gauges, flight controls, and hydraulic systems). For example, aircraft also have catering equipment, heating/cooling systems, lavatories, power seats, water heaters, and other components that require power as well. Specific components that may require external power include but are not limited to trash compactors (in galley and/or lavatory), ovens and warming compartments (e.g., steam ovens, convection ovens, bun warmers), optional dish washer, freezer, refrigerator, coffee and espresso makers, water heaters (for tea), air chillers and chilled compartments, galley waste disposal, heated or cooled bar carts/trolleys, surface cleaning, area heaters, cabin ventilation, independent ventilation, area or spot lights (e.g., cabin lights and/or reading lights for passenger seats), water supply, water line heating to prevent freezing, charging stations for passenger electronics, electrical sockets, vacuum generators, vacuum toilet assemblies, grey water interface valves, power seats (e.g., especially for business or first class seats), passenger entertainment units, emergency lighting, and combinations thereof. These components are important for passenger comfort and satisfaction, and many components are absolute necessities.

However, one concern with these components is their energy consumption. As discussed, galley systems for heating and cooling are among several other systems aboard the craft which simultaneously require power. Frequently, such systems require more power than can be drawn from the aircraft engines' drive generators, necessitating additional power sources, such as a kerosene-burning auxiliary power unit (APU) (or by a ground power unit if the aircraft is not yet in flight). This power consumption can be rather large, particularly for long flights with hundreds of passengers. Additionally, use of aircraft power produces noise and CO₂ emissions, both of which are desirably reduced. Accordingly, it is desirable to identify ways to improve fuel efficiency and power management by providing innovative ways to power these components.

Further, a number of systems on-board an aircraft require water for their use. Galleys and lavatories are connected to the aircraft potable water tank, and water is required for many of the related on-board services. Water pipes connect the water tank to the water consumers. For example, coffee cannot be made, passengers cannot use the lavatories, hand-washing water is not provided, and so forth, until the APU or electrical switch is on in order to allow water to flow. Some examples of the water consumers on-board aircraft are the steam oven, beverage maker (coffee/espresso/tea), water boiler, tap water supply, dish washer, and the toilet vacuum system. Aircraft typically carry large amounts of potable water in the potable water tanks, which is uploaded when the aircraft is on the ground. A number of water saving attempts have been made to help re-use certain types of water onboard aircraft, but it is still desirable to generate new ways to generate and/or re-use water on-board aircraft. Other systems use heat, which is also typically generated by separate units. For example, heated water is desirable for use in warming hand-washing water (and to prevent freezing of the water pipes), the ovens and warmers onboard require heat, as well as the cabin and seat heating units.

The present inventors have thus sought new ways to generate power to run on-board components, as well as to harness beneficial by-products of that power generation for other uses on-board passenger transport vehicles, such as aircraft.

The relatively new technology of fuel cells provides a promising cleaner and quieter means to supplement energy sources already aboard aircrafts. A fuel cell has several outputs in addition to electrical power, and these other outputs often are not utilized. Fuel cell systems combine a fuel source of compressed hydrogen with oxygen in the air to produce electrical and thermal power as a main product. Water and Oxygen Depleted Air (ODA) are produced as by-products, which are far less harmful than CO₂ emissions from current aircraft power generation processes.

Document DE 102006020146 describes an individual seat for a passenger transport vehicle, comprising a seat back, a seat pan, and a seat base, a fuel cell, and a fuel cell storage portion, said fuel cell storage portion housing a hydrogen source, and the seat further comprising conduits that deliver energy and water from the fuel cell and corresponding hydrogen source, positioned in the fuel cell storage portion, to areas of the seat.

### BRIEF SUMMARY

Embodiments of the invention described herein provide aircraft seats that are individually fitted with fuel cells, enabling the seats to be fully autonomous and freely placed in the cabin independently of any connection to any other seat or to any aircraft power features. The seat fitted with a fuel cell can then use fuel cell power, as well as the by-products generated by the fuel cell to supply energy and elements to optional seat functions.

### BRIEF DESCRIPTION OF THE DRAWINGS

FIG. 1 shows a top plan view of an aircraft power architecture of the prior art.
Figure 2 shows a side perspective view of one embodiment of a seat with an integrated fuel cell system.
Figure 3 shows one example of a seat using heat as a fuel cell by-product.
Figure 4 shows another example of a seat using water and oxygen depleted air as by-products.
Figure 5 shows a schematic example of input and output elements in connection with a fuel cell.
Figure 6 shows a schematic of how fuel cells may be used to power aircraft systems.

### DETAILED DESCRIPTION

Embodiments of the present invention provide improvements to seats, by fitting the seats with a fuel cell. The features will be described herein with respect to aircraft seats, and particularly aircraft seats that desirably perform a number of varying functions and provide varying features, but it should be understood that the described features may also be used in connection with any other seats that use electrical power, heat, water and/or oxygen depleted air, such as vehicle seats, massage chairs, heated seats, beauty parlor seats, and so forth.

Specifically, most aircraft seats are currently connected to the centralized aircraft power unit, which requires connection cables, time and expense for installation, and kerosene consumption. This power source is also shared by a number of other aircraft systems, which creates a large power pull during fight. For example, some aircraft seats use power for electrical actuators that are able to change the seat position, for in-flight entertainment options, and for other powered accessories such as the reading light, PC or other electronic device power supply, oxygen supply, hot air, massage features, heated seat features, inflatables cushions, and other features. These features require that the seat be fully linked to the cabin environment, as well as linked to the aircraft architecture due to data transmission cables needed for each in-flight entertainment (IFE) unit, which are in turn linked to a centralized system for storing and distributing media to each IFE. The power provided for these systems is typically generated by the aircraft engines, which generates CO₂.

The use of fuel cells for addressing these CO₂ emissions has been promising, but none of the solutions to date have accounted for cabin configuration, which is labor intensive and expensive to change. It is desirable to provide flexibility for the seat positions, which provides overall cabin flexibility. Additionally, fuel cell energy is believed to only be really competitive compared to engine power if the fuel cell bypass products are used, as well as the energy that is created from the fuel cell system.

Accordingly, the present inventors have determined that individual seats may be fitted with a fuel cell, in which heat, water and oxygen depleted air generate the energy and provide the elements to be used at the seat level. This makes the seat fully autonomous and allows more flexibility to the cabin configuration, as the seats are not required to be connected to other systems (such as the power system or the water system) in order for the fuel cell by-products to be used.

Examples of a potential seat power consumptions for various scenarios are shown below:

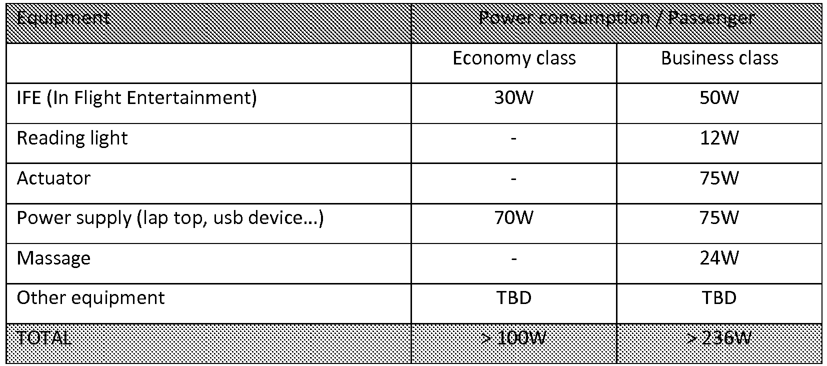

Some seat systems may also use heat for a heated seat and/or may use water for a cooling mist option.

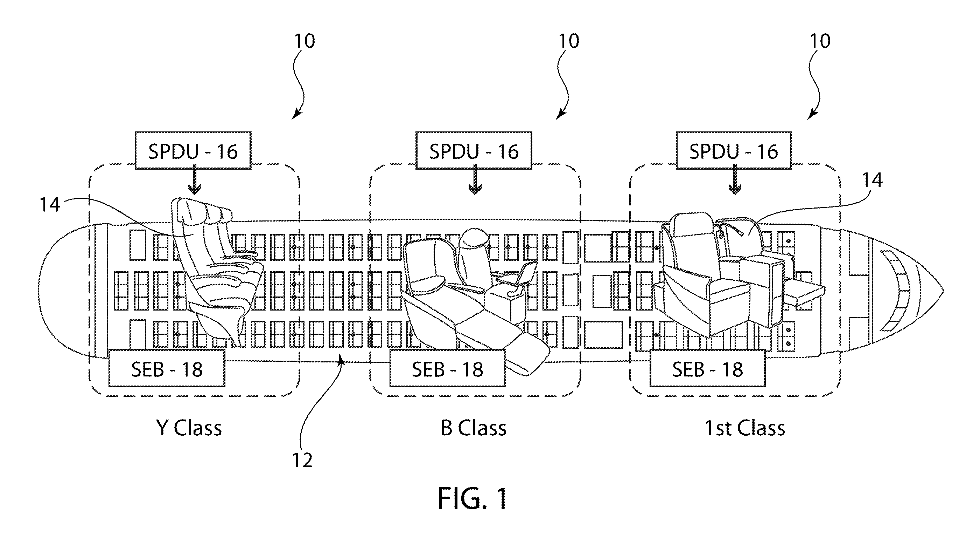

As shown the illustrated prior art seat configuration of Figure 1, power is typically provided in a central location and then routed out to the seats. There are multiple zones 10 in the aircraft interior 12, such as the first class cabin, the business class cabin, and/or the economy cabin. Each zone 10 has a plurality of seats 14 contained in that particular zone 10. Each zone 10 is powered by a Secondary Power Distribution Unit (SPDU) 16. The power is then transmitted to a Seat Electric Box 18, one of which is incorporated with each seat 14, and power is then distributed to each individual piece of equipment that needs power and is associated with the seat. This figure illustrates an aircraft power architecture that uses centralized power distributed to the SPDU, which is treated at seat level by seat electronic power to convert the power to 24 or 12 V. Problems with this configuration are that the seat flexibility is limited and additional power is needed to direct power from the SPDU 16 to each SEB 18. The seats must all be interconnected via a network of cables and conduits. Additionally, if a problem is encountered with one of the distribution units, the power to multiple seats is affected. Some companies have sought to provide an autonomous seat that uses power generated by a fuel cell, but those seats generally use one fuel cell system that supplies a plurality of seat devices. See e.g., U.S. Patent No. 7,731,126. Those systems also focus primarily on using the fuel cell system to supply humidified air, as opposed to providing systems that use fuel cell power along with the other fuel cell system by-products for other uses on the aircraft seat.

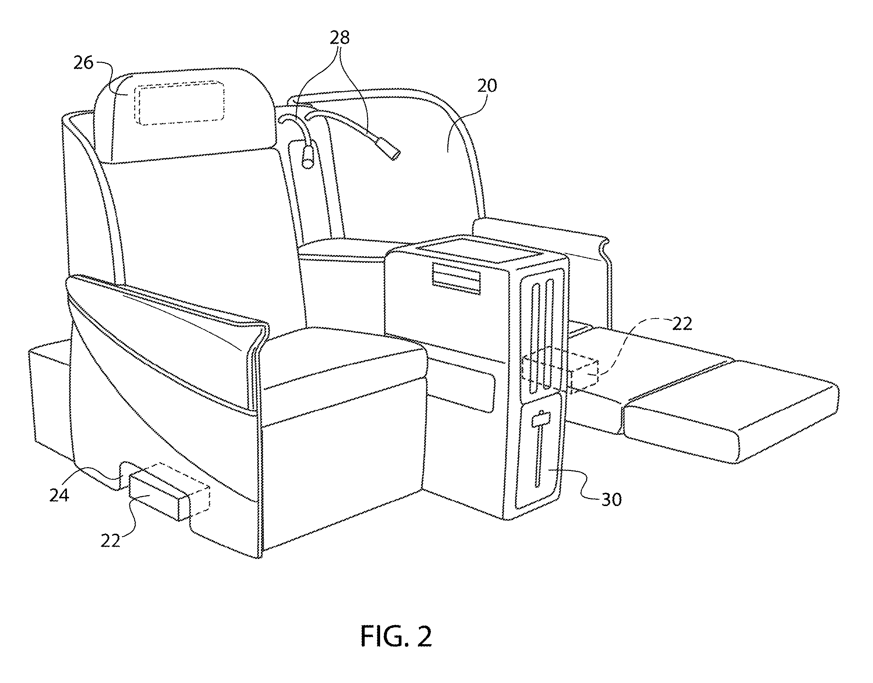

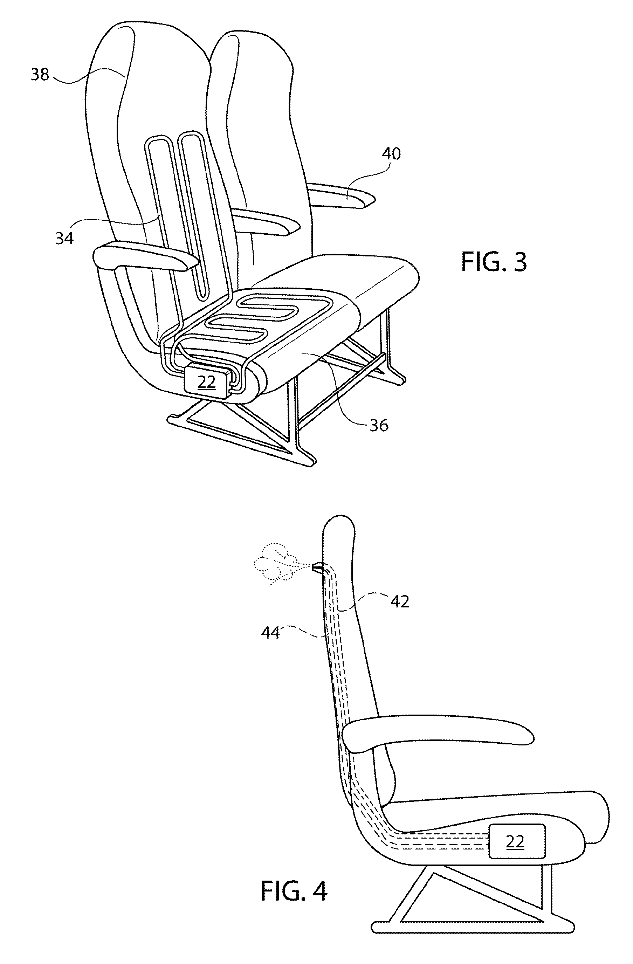

One improvement to this problem is shown in Figure 2. Figure 2 illustrates an individual seat 20 with a dedicated fuel cell 22. This seat 20 is described as having a number of features that may be powered by the fuel cell 22, but it should be understood that fewer (or more) features may be provided for any particular individual seat 20. For example, first class and business class seats, as well as seats configured for transcontinental aircraft, typically have enhanced features over typical economy seats. The embodiments described herein are equally useable on all seat options (as well as on other types of non-aircraft seats that may have powered features). The seat has a fuel cell storage portion 24, which houses the hydrogen source and any additional materials related to the fuel cell 22 directly on the seat 20. This eliminates the need for a connection to the aircraft power, which saves time for installation as well as reduces the weight of the system, providing an autonomous seat. The storage portion 24 may have a cover or a hinged door to cover or otherwise enclose the storage portion 24. Alternatively, the fuel cell may be positioned in an external box that is mounted to the seat frame or base (an example of which is shown in Figures 3 and 4). The hydrogen source, the fuel cell 22, and/or its storage portion 24 may be removable from the seat 20. The fuel cell container should be easily accessible and can be removed and replaced when empty.

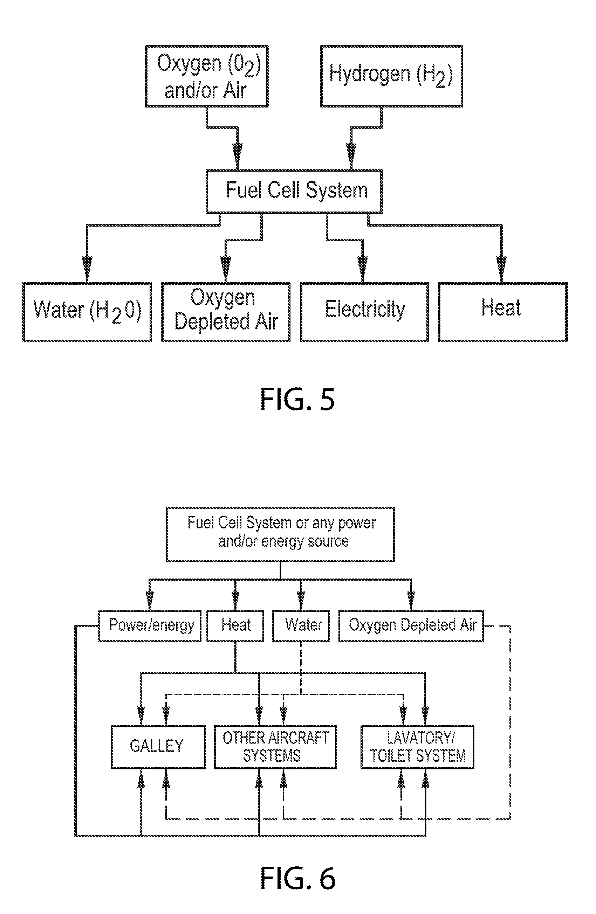

As shown in Figure 2, the following fuel cell by-products may be being used on the seat 20: water, heat, oxygen depleted air, and electricity. An example schematic showing fuel cell by-products and their routing on-board the aircraft is shown in Figure 6. The electricity created from the individual fuel cells 22 on each seat 20 may be used to power the IFE units 26, the seat actuation functions (forward/backward of the seat back; up/down of the leg rest and backrest), powered reading lights and/or area lights 28, powered charging stations or other power stations 30, massage functions, or any other features that may be provided on seat 20.

Additionally, however, the fuel cell by-products other than electricity may also be used. For example, the heat produced by the fuel cell may be used to warm the passenger. In this embodiment, as shown in Figure 3, the heat may be used to heat water or any other fluid that is directed through the seat via one or more conduits 34. Conduits 34 may be positioned in the seat pan 36 and/or in the seat backrest 38. They are designed to use the heat produced by the fuel cell to warm the passenger. The heat is transferred to the passenger via water or any thermal conductor through the conduits 34, which may be provided as one or more tubes/conduits 34 (shown) or panels (not shown) that are positioned inside the seat portions 36, 38. The degree of heat to be delivered may be adjusted by an electric valve on a control panel or on the arm rest 40, the power for which may be provided by the fuel cell system.

Another use of the fuel cell by-product on the seat 20 is to provide a water mist 42 to the passenger. A water mist may be generated by the water by-product from the fuel cell reaction and may be delivered via mister tube 42. Oxygen depleted air (ODA) by-product may be delivered to the mister tube 42 via a separate conduit 44 used to pressurize the water for delivery. Tubes 42 and 44 may have separate exit points from the fuel cell 22 and may join close to or near the point where water exits the mister tube 42. Adjustment of the amount and pressure of the water mist may be provided by an electric fan.

A further use of the fuel cell by-product on the seat 20 is to provide an in-flight entertainment (IFE) screen cleaning function. The hot water and oxygen depleted air (ODA) produced by the fuel cell may be used to clean the IFE screen. This cleaning can be done by the individual passenger, or may be used by the flight crew during aircraft turn-around. The system may be similar to the water mist function, with appropriate tubing directed from the fuel cell to an area near the IFE unit.

The embodiments described herein provide aircraft seats that are individually fitted with fuel cells, enabling the seats to be fully autonomous and freely placed in the cabin independently of any connection to any other seat or to any aircraft power features. The seat fitted with a fuel cell can then use fuel cell power, as well as the by-products generated by the fuel cell to supply energy and elements to optional seat functions. For example, the seat 20 may be fitted with a dedicated fuel cell 22 where heat ,water and ODA produced by the fuel cell is used to clean the IFE screen. Alternatively or additionally, the heat, water, and ODA produced by the fuel cell may be used to heat the seat by means of a net of conduits, such as tubes, filled with a thermal conductor fluid (which may be water, silicone, or any other appropriate material) or a cushion filled such fluid. Alternatively or additionally, the heat, water, and ODA produced by the fuel cell may be used to create a water mist for the comfort of the passenger.

Figure 5 shows a schematic example of input elements that may be used for a fuel cell, showing the materials needed to generate power (O₂ and H₂) and the output elements (H₂O, oxygen depleted air (ODA), and heat) that may be reused by the seat functions described here, as well as additional aircraft components.

Figure 6 shows an example of how fuel cells may be used in connection with various aircraft components in order to provide power to those components, as well as to provide alternatives for using the fuel cell by-products for various components.

Changes and modifications, additions and deletions may be made to the structures and methods recited above and shown in the drawings without departing from the scope or spirit of the invention and the following claims.

## Claims

1. An individual seat (20) for a passenger transport vehicle, comprising:
- a seat back (38), a seat pan (36), and a seat base, and
- a fuel cell (22),
whereby said individual seat (20) further comprises:
- a fuel cell storage portion (24) provided on the seat base, said fuel cell storage portion (24) housing a hydrogen source and any additional materials related to the fuel cell (22), and
- conduits configured to deliver energy, heat, water, oxygen depleted air, or any combination thereof from the fuel cell and corresponding hydrogen source positioned in the fuel cell storage portion (24) to areas of the seat.

2. The individual seat of claim 1, **characterized in that** the seat back (38), the seat pan (36), or both comprise conduits (34) containing a thermal conductor, and wherein heat generated from the fuel cell (22) is transferred to the conduits (34) to warm the seat (20).

3. The individual seat of claim 1, **characterized in that** the seat (20) comprises a water mister (42) and wherein water generated from the fuel cell (22) is transferred to the water mister (42).

4. The individual seat of claim 3, **characterized in that** oxygen depleted air from the fuel cell (22) is transferred to the water mister (42) to pressurize the water.

5. The individual seat of claim 1, **characterized in that** water and oxygen depleted air from the fuel cell (22) are used to clean an inflight entertainment screen (26).

6. The individual seat of claim 1, **characterized in that** the seat (20) is mounted on-board a passenger aircraft.

## Patentansprüche

1. Einzelsitz (20) für ein Personenfahrzeug, umfassend:
- eine Sitzrückenlehne (38), ein Sitzkissen (36) und eine Sitzbasis und
- einer Brennstoffzelle (22),
wobei der Einzelsitz (20) weiterhin aufweist:
- einen Brennstoffzellelagerungsabschnitt (24) an der Sitzbasis, wobei der Brennstoffzellelagerungsabschnitt (24) eine Wasserstoffquelle und jedes zusätzliche Material für die Brennstoffzelle (22) aufnimmt, und
- Leitungen, welche derart ausgebildet sind, dass sie Energie, Wärme, Wasser, an Sauerstoff verarmter Luft oder einer Kombination davon aus der Brennstoffzelle und der entsprechenden Wasserstoffquelle in dem Brennstoffzellelagerungsabschnitt (24) in Sitzbereiche zuführen.

2. Einzelsitz nach Anspruch 1, **dadurch gekennzeichnet, dass** die Rückenlehne (38), die Sitzbasis (36) oder die beide Leitungen (34) mit einem Wärmeleiter umfassen, wobei die durch die Brennstoffzelle (22) erzeugte Wärme zu den Leitungen (34) zum Heizen des Sitzes (20) übertragen wird.

3. Einzelsitz nach Anspruch 1, **dadurch gekennzeichnet, dass** der Sitz (20) einen Wasserzerstäuber (42) umfasst, wobei die durch die Brennstoffzelle (22) erzeugte Wasser zu dem Wasserzerstäuber (42) übertragen wird.

4. Einzelsitz nach Anspruch 3, **dadurch gekennzeichnet, dass** die an Sauerstoff verarmte Luft von der Brennstoffzelle (22) zu dem Wasserzerstäuber (42) zum Setzen des Wassers unter Druck übertragen wird.

5. Einzelsitz nach Anspruch 1, **dadurch gekennzeichnet, dass** das Wasser und die an Sauerstoff verarmte Luft aus der Brennstoffzelle (22) zum Reinigen eines Bordunterhaltungsbildschirms (26) verwendet werden.

6. Einzelsitz nach Anspruch 1, **dadurch gekennzeichnet, dass** der Sitz (20) an Bord eines Passagierflugzeugs eingebaut ist.

## Revendications

1. Siège individuel (20) destiné à un véhicule de transport de passagers, comprenant :
- Un dossier de siège (38), une assise de siège (36) et une base de siège, et
- une pile à combustible (22),
ledit siège individuel (20) comprenant en outre :
- une partie de rangement de pile à combustible (24) prévue sur la base de siège, ladite partie de rangement de pile à combustible (24) logeant une source d'hydrogène et des matières supplémentaires associées à la pile à combustible (22), et
- des conduits configurés pour alimenter des zones du siège en énergie, en chaleur, de l'eau, en air appauvri en oxygène, ou toute combinaison de ceux-ci à partir de la pile à combustible et de la source d'hydrogène correspondante placée dans la partie de rangement de pile à combustible (24).

2. Siège individuel selon la revendication 1, **caractérisé en ce que** le dossier de siège (38), l'assise de siège (36) ou les deux comprennent des conduits (34) contenant un conducteur thermique, la chaleur générée par la pile à combustible (22) étant transférée aux conduits (34) pour chauffer le siège (20).

3. Siège individuel selon la revendication 1, **caractérisé en ce que** le siège (20) comprend un brumisateur (42), l'eau générée par la pile à combustible (22) étant transférée au brumisateur (42).

4. Siège individuel selon la revendication 3, **caractérisé en ce que** l'air appauvri en oxygène est transféré de la pile à combustible (22) au brumisateur (42) pour mettre l'eau sous pression.

5. Siège individuel selon la revendication 1, **caractérisé en ce que** l'eau et l'air appauvri en oxygène de la pile à combustible (22) sont utilisés pour nettoyer un écran de divertissement en vol (26).

6. Siège individuel selon la revendication 1, **caractérisé en ce que** le siège (20) est monté à bord d'un avion de passagers.
